Europäisches Patentamt

European Patent Office

Office européen des brevets

(11) Publication number: **0 623 284 A1**

## EUROPEAN PATENT APPLICATION

(21) Application number: 93107231.8

(51) Int. Cl.⁵: **A01N 63/04**

(22) Date of filing: **04.05.93**

(43) Date of publication of application:
**09.11.94 Bulletin 94/45**

(84) Designated Contracting States:
**DE**

(71) Applicant: **RESEARCH INSTITUTE FOR PLANT PROTECTION**
**Binnenhaven 12,**
**P.O. Box 9060**
**NL-6700 GW Wageningen (NL)**

(72) Inventor: **Den Belder, E. Ir.**
**Reeboklaan 22**
**6705 DB Wageningen (NL)**

(74) Representative: **Schmidt, Werner, Dr.**
**Hoechst AG**
**Zentrale Patentabteilung**
**Postfach 80 03 20**
**D-65926 Frankfurt am Main 80 (DE)**

(54) Biological control of plant-parasitic nematodes using nematophagous fungi.

(57) The invention relates to the use of nematophagous fungi to controll plant parasitic nematodes and nematicidal compositions, containing fungi which form a sticky mycelium having undifferentiated hyphae which are able to attach to the nematodes. The invention further relates to a process for protecting plants against the action of plant parasitic nematodes, which comprises treating the plants, parts of the plants/or the soil with nematophagous fungi having undifferentiated hyphae which are able to attach to the nematodes. In an preferred embodiment the fungus Arthrobotrys oligospora (CBS 289.82) is used.

Rank Xerox (UK) Business Services
(3.10/3.09/3.3.4)

## 1. Introduction

Species of the Dactylaria-complex are able to capture vermiform nematodes with trapping devices (Stirling, 1991). The infection process generally can be distinguished in different stages: attraction and capture (attachment), penetration, subsequent toxification/ inactivation and digestion of the nematodes of the fungus.

Most in vitro studies on the successive events of the infection process were performed on a model system with Panagrellus redivivus, a bacteriophagous nematode, and an isolate of Arthrobotrys oligospora as the fungus (Tunlid et al., 1972). On capture and infection of plant-parasitic nematodes few reports are presented and little is known about the physiological and biochemical processes of the fungus-nematode interaction (Den Belder, 1991).

Several nematode-capturing fungi seem to be highly specific in attraction, capture and infection of particular nematode species (Jansson & Nordbring-Hertz; 1980; Boag et al., 1988; Esser et al., 1991). Other parasites of nematodes such as the bacterium Pasteuria penetrans have shown specificity in attachment to different populations of the same nematode species e.g. Meloidogyne spp. Thus results obtained with other than plant-parasitic nematodes may have a limited value in predicting capture ability of the latter.

Depending on their relative saprophytic/predacious abilities nematophagous fungi have been divided into three ecological groups (Jansson and Nordbring-Hertz, 1980). Group 1, considered as the most saprophytic, constitutes the adhesive network formers. The nematode trapping rings structures are formed as a result of contact with nematodes. The fungi show good saprophytic growth on artificial media and are only weakly predatory.

Group 2 constitutes fungi producing other types of traps: (non-)constricting rings, adhesive knobs and adhesive branches. Trap formation is usually spontaneous in the absence of nematodes. These fungi show a higher predacious ability and weaker saprophytic ability than the group of the adhesive network formers.

Group 3 constitutes the endoparasitic fungi, which do not form any mycelium in soil. They persist in the soil as conidia or exist as zoospores. Most of these fungi are obligate nematode parasites.

Monacorsporium cionopagum (CBS 228.52) is a constricting ring former, Arthrobotrys dactyloides (CBS 109.37) as well as Arthrobotrys conoides (CBS 265.83), Arthrobotrys oligospora (CBS 289.82, CBS 115.81 and ATCC 24927), Arthrobotrys scaphoides (CBS 226.52) and Duddingtonia flagrans (CBS 565.50) belong to the above-metioned group 2 and are adhesive network formers.

Microorganisms need to be active at prevailing soil conditions in the field and to survive abiotic conditions that may occur during the day, in order to be effective and widely applicable as biological control agents against soil-inhabiting nematodes. Gronvold (1989) found a significant effect of temperature on the adhesive network development in Arthrobotrys oligospora (ATCC 24927): mycelium did not respond to juveniles or responded only slowly with the development of networks at temperatures below 15 °C or above 25 °C. Also Dactylella spp. between 20 and 24 °C captured higher proportions of nematodes captured than at lower temperatures (Feder, 1963).

The nutrients available in the environment of the fungus have effects on its metabolism and its morphognesis (Esser et al., 1991). Variations of the nutrient source showed that development of adhesive networks is highly affected by nutrients available (Gronvold, 1989). For example, isolates of A. oligospora developing poorly networks on water agar whereas vegetative hyphae developed normally (Soprunov, 1966; Nordbring-Hertz, 1977; Jansson and Nordbring-Hertz, 1980).

Morphological responses to light has been described for many fungi (Leach, 1971). Gronvold (1989) reported that light suppresses development of ring structures in A. oligospora (ATCC 24927).

Another key factor which plays a role in trapping activity is the age of the hyphae. Loss of virulence of old cultures of nematode-capturing fungi was observed by Couch (1937) and Feder (1963). Such loss of virulence by nematode-capturing fungi is of special significance because it may limit their usefulness for nematode control. More recent work by Heintz (1978) showed that ageing of mycelium of A. dactyloides and A. cladodes resulted in a reduction of the ability to capture nematodes. Also loss of adhesiveness of ring structures of Dactylella megalospora was found within seven days (Esser et al., 1991). Reduction of capture in ring structures of A. oligospora (ATCC 24927) also occured, when fungal colonies were kept for seven weeks at temperatures between 5 and 35 °C (Gronvold, 1989).

The attachment of all fungi decribed up to now have been restricted to those which develop special trapping devices.

It has been found surprisingly that the attachment between the nematode and the fungus is not only realized by complex capture structures, but can also be accomplished by not visibly differentiated vegetative hyphae. A special strain of Arthrobotrys oligospora was identified which is able to attach to nematodes with it's vegetative mycelium.

2. Description of the invention

The invention relates to the use of nematophagous fungi to controll plant parasitic nematodes. The invention further relates to a process for protecting plants against the action of plant parasitic nematodes, which comprises treating the plants, parts of the plants or the soil with nematophagous fungi having undifferentiated hyphae which are able to attach to the nematodes. In an preferred embodiment the fungus Arthrobotrys oligospora deposited under the number 289.82 at the Centraalbureau voor Schimmelcultures, Baarn (CBS 289.82) is used.

More generally the invention relates to a process for obtaining those fungi.

The nematophagous fungi are selected on basis of capacity of the hyphae of the fungi to attach to the nematode not only with the ring-structures, but with the whole length of their mycelium. This selection can be performed for example as follows:

1. Growing the fungi on an appropriate medium or other substrates until a definite mycelial mat has been formed,

2. Pipetting the nematodes on the mycelial mat and allow them to remain for an sufficinet time, e.g. for five to ten minutes on the mat,

3. Washing the fungal culture from the faucet, e.g. by by placing it direcectly in the jet of tap water,

4. Examining the fungal mycelium whether the nematode have attached only to the special trapping devices or also to the non differentiated hyphae.

The invention further relates to a biopesticide composition for controlling the growth of nematodes comprising an nematophagous fungus having virulence against the targeted nematode in association with an agricultural carrier selected from a liquid, powder, granule.

The liquid may be water, oil or a wetting agent. The fungus may be especially in the form of mycelia when the carrier is a liquid.

The composition which may be used to treat the plants may be in the form of coated granules consisting of fungal konodiae or mycelium.

The particles can be applied directly to the soil or the substrate or used to dress or coat the plants or parts of the plants, especially the seeds.

The composition can be used to controll plant parasitic cyst, root-knot and lesion nematodes, especially root-knot nematodes. In an preferred embodiment the composition is used to controll the growth of Meloidogyne hapla and Meloidogyne incognita belonging to the Heteroderidae. This family includes also the potato cyst nematode and the sugar beet cyst nematode.

The term fungus as used herein encompassess all parts of the fungus as for example spores, restspores, chlamydospores, konidia and the mycelium.

The composition may also contain other fungi which act in the same way and which improve the nematocidal effect. The composition may also contain other suitable additives as for example sustaining, protective nutrient carriers.

Plants which can be protected are either monocotyledons or dicotyledons. Examples of families that are of special interest are Solanaceae and Brassicaceae. Examples of species of commercial interest that can be protected include:

| | |
|---|---|
| - tobacco, Nicotiana tabacum L. | - tomato, Lycopersicon esculentum Mill, |
| - potato, Solanum tuberosum L., | - petunia, Petunia hybrida (Solanaceae) |
| - Canola/Rapeseed, | - Brassica napus L., |
| - cabbage, broccoli, kale etc., | - Brassica oleracea L., |
| - mustards Brassica juncea L., | - Brassica nigra L., |
| - Sinapis alba L. (Brassicaceae), | |
| - sugar beet, Beta vulgaris,(Chenopodiaceae), | |
| - cucumber, Curcurbita sp. (Curcurbitaceae), | |
| - cotton, Gossypium sp., (Malvaceae), | |
| - sunflower, Helianthus annuus, | |
| - lettuce Lactuca sativa, (Asteraceae = Compositae), | |
| - pea, Pisum sativum, | |
| - soybean, Glycine max and alfalfa, Medicago sp. (Fabaceae = Leguminoseae), | |
| - asparagus, Asparagus officinalis; | - gladiolus, Gladiolus sp., (Lilaceae); |
| - corn, Zea mays and | - rice, Oryza sativa (Poaceae). |

In an preferred embodiment the nematocide prevents diseases of plants such as potato, tomato, wheat, cabbage and chinese cabbage.

It has been found that attachment of Meloidgyne spp. to adhesive hyphae of Arthrobotrys oligospora (CBS 289.82) is very effective under a broad range of circumstance which can occur in the soil, e.g. temperature, nutrient level and light.

At temperatures occuring in the field, e. g. between 5 and 35 °C this fungal isolate and the juveniles of this nematode species are both sufficiently active to become firmly attached to ro each other, resulting in the arrest of the nematodes.

The temperature independent capture of nematodes by hyphae appears quite exceptional in comparison with fungi that capture nematodes through more complex structures only.

Hyphae of A. oligospora (CBS 289.82), developing on water agar and those growing on low nutrient salt media or corn meal agar, are able to capture all M. hapla juveniles present within one hour. Under nutritional conditions ranging from simple to more complex, the rate of nematode-hypha attachment did not appear to be influenced.

In A. oligospora (ATCC 24927) inhibitory effects of light on trap formation have been reported (Gronvold, 1989). Light did not affect nematode-hypha attachment or ring structure development in A. oligospora (CBS 289.82).

The trapping ability of hyphae in the isolate CBS 289.82 was remained even when the growth time of the hyphae was more than 70 days. Attachment of nematodes to hyphae from seven weeks old culture was comparable to that of four weeks old cultures. Mycelium, developing during six weeks at 25 °C and subsequently cultured for more than five weeks at 5, 10 or 15 °C, did not show any decline in attachment efficacy or development of trophic hyphae.

3. Materials and Methods

The following disclosure also provides the technique how the nematodes can be trapped. The disclosure will then be completed with the description of the conditions under which the nematodes can be trapped, also merely by way of examples for non-limitative illustration purposes.

3.1 Fungal species and culture methods.

Stock cultures of Arthrobotrys conoides (CBS 265.83), Arthrobotrys dactyloides (CBS 109,37), Arthrobotrys oligospora (CBS 289.82), Arthrobotrys oligospora (CBS 115.81 = ATCC 24927), Arthrobotrys oligospora (ATCC 24927), Arthrobotrys scaphoides (CBS 226.52), Duddingtonia flagrans (CBS 565.50) and Monacrosporium cionopagum (CBS 228.52) were maintained on corn meal agar (Oxoid, CMA 1:1, 1,5% agar) in Petri-dishes (diameter 8.8 cm) at 25 ± 1 °C, with monthly routine transfers to fresh medium.

4

3.2 Nematodes

A population of root-knot nematodes, M. incognita originally isolated from tomato plants in Dutch glasshouses, was obtained from the Department of Nematology, Wageningen Agricultural Unversity. M. hapla originally isolated from rose plants, was obtained from the DLO-Centre for Plant Breeding and Reproducing Research, Wageningen. The nematodes were maintained continuously on tomato plants (Lycopersicon esculentum Mill.cv Moneymaker) in silversand at a temperature of 22-25 °C and 20 °C respectively, in a greenhouse. Newly hatched second-stage juveniles were obtained by incubating egg masses on a 50 $\mu$m sieve in water for 2 days at 20 °C. The outer surface of 2-days old juveniles of Meloidgyne spp. was sterilized in a mixture of 0.02% (w/v) ethoxy-ethylmercury chloride (Aretan) and 0.1 % (w/v) streptomycin sulphate for about 2 h in a 10 ml conical centrifuge tube and subsequently washed three times in sterile water (s'Jacob & van Bezooyen, 1984). Because of possible changes in the nematodes surface or activity as a result of the sterilization procedure, which might influence the trapping ability of the fungi tested, in one test non-sterilized and water-washed juveniles of two different populations of M. hapla were included (isolated from rose and Bergenia sp.).

To assure purity of cultures, the Meloidogyne species were routinely characterized on the basis of enzyme phenotypes of females (Esbenshade & Triantaphyllou, 1985). Difference between species was based on their esterase, malate dehydrogenase and superoxide dismutase phenotypes.

A population (juveniles and adults) of the root lesion nematode, Pratylenchus penetrans (Cobb), was obtained from the Research Station for Floriculture, Aalsmeer; second-stage juveniles of the potato-cyst nematodes. Globodera rostochiensis (Wollenweber), and G. pallida (Stone) pathotypes Ro1 and Pa3, were obtained from a culture stock in the centre for Plant Breeding and Reproducing Research, Wageningen. These three nematode species were surface sterilized in streptomycin-Aretan mixture for 30 min in a Büchner funnel and subsequently washed once in 0.1 % streptomycin and three times in sterile water. Contamination by microorganisms was regularly checked after inoculating nematodes on bouillon agar or water agar.

3.3 Trapping ability

Individual 4-mm plugs cut from the periphery of a growing stock colony of A. conoides, A. dactyloides, A. oligospora (CBS 289.82, CBS 115.81, ATCC 24927) A. scaphoides, D. flagrans and M. Cionopagum were placed upside down in the centre of small Petri-dishes (44 mm) on CMA 1:10 (thickness 1-2 mm) and removed one week after inoculation. The Petridishes (Lux) had a coverglass bottom, thus facilitating microscopic with an inverted microscopic (Zeiss Axiovert 10 equipped with an enhanced contrast video system, Analogue Contrast Enhancement Zeiss). They were kept at 25 ± 1 °C for 21 more days. Subsequently, experiments were performed at 25 ± 1 °C, 90-100 % r.h., at Ph = 6.5, without light (Waalwijk et al., 1990).

In each test, a drop adjusted to contain about 50 second-stage juveniles of M. hapla or M. incognita, was added to the 4-weeks old fungal cultures. Juveniles moved actively from the inoculation point. At 25 °C the mobility of second stage larvae was about 7.3 mm h$^{-1}$ on CMA 1:10, 1.5 % agar. At regular time intervals, the number of captured nematodes was counted and expressed as a percentage of the number of introduced nematodes. Mobile and immobile captured individuals were counted separately.

Assays usually consisted of 3 replicate Petri-dishes and three repetitions in time.

Differences in percentage capture and immobilization were analyzed for days 1, 2, 6 and 9 by performing one-way analysis of variance (ANOVA) on the arcsin-transformed values. Differences were further analyzed by comparing the means for the different fungi using Student's t-test. Because D. flagrans and two isolates of A. oligospora did not show any ability to capture root-knot nematodes, experiments were repeated with younger fungus colonies (1, 2 and 3 weeks old). Tissue culture plates (24 wells of 15 mm diameter) were used because younger fungal colonies do not cover the whole agar surface of the small Petri-dishes.

Capture of four different plant-parasitic nematodes by Arthrobotrys oligospora (CBS 289.82). The ability of A. oligospora (CBS 289.82) to capture four different plant-parasitic nematode species: P. penetrans, G. rostochiensis (Ro1) and G. pallida (Pa3) and M. hapla was also tested using 4-weeks old fungal cultures in small Petri-dishes.

Total numbers of captured nematodes and the number of nematodes associated with the ring-structures and trophic hyphae were counted. Observations were made after 6 h, 1, 3, 6, 10 and 16 days. The experiment was repeated twice. Difference were analyzed by comparing the means using a generalized linear model (GLM) for binary data (Mc Cullagh & Nelder, 1989) followed by Student's t-test (RPAIR procedure of Genstat 5).

### 3.4 Capture mechanism

After it was demonstrated that A. oligospora (CBS 289.82) could attach nematodes with morphologically unmodified hyphae, 30 active second-stage juveniles of M. hapla were followed individually on the mycelial mat of a 4-week old culture from the moment of addition till attachment to hyphae (maximum observation time 45 min). The number of nematode-hypha encounters was counted.

To check if nematodes were also attached to newly formed hyphae, 4-mm plugs cut from a stock colony were placed upside down in 24 well-plates on CMA 1:10 and removed 24, 48, 72, 96 f after inoculation. The area which had been in contact with the mycelium from the plug was removed with a cork borer and subsequently filed up with fresh agar to guarantee that nematodes only could be attached to newly formed young hyphae. Six hours after addition of about 50 nematodes-fungus attachment was checked.

### 3.5 Scanning electron microscopy

In order to ascertain whether ring structures developed at the initial point of attachment, the infection processes were studied on 20 second-stage juveniles of M. hapla.

Pieces of agar (4 mm in diameter and 1-2 mm deep, containing recently attached nematodes were mounted on copper stubs with a thin film of Tissue Tek (Hexland Ltd., England).

The samples were immediately frozen by immersion (plunge cooling) in nitrogen slush in the EMSCOPE SP2000 Cryogenic-Preparation System. The stubs were transferred under vacuum conditions to the preparation chamber where surface ice was etched by conductice heating. The specimens were subsequently sputtered with gold and transferred to the scanning electron microscope (Jeol JSM 35C), equipped with a cryo-stage. The specimens were photographed at 15 kV accelerating using a Kodak 35-mm Pan X film.

Because in A. oligospora (CBS 289.82) three dimensional structures develop after the nematode has adhered to the hypha, the term ring structures have been used in stead of capture structures.

### 3.6 Saprophytic growth rate

Experiments on saprophytic growth of several nematode-capturing fungi at different temperatures were performed in small Petri-dishes (diameter 44 mm) with those species which had trapped juveniles of Meloidogyne spp. in the earlier tests. Plugs of 2-week old cultures of A. conoides, A. dactyloides, A. oligospora (CBS 289.82), A. scaphoides and M. Cionopagum were inoculated on CMA 1:10. Five Petri-dishes with each species were kept at temperatures of 5 °C, 10 °C, 15 °C, 20 °C, 25 °C, 30 °C, 35 °C. The average mycelial growth was recorded as the average distance from the centre of the inoculated agar piece to the outer rim of the growing hyphae (at day 3 and day 7) and was expressed in mm per day.

Saprophytic growth was also measured for three isolates of A. oligospora: CBS 289.82, CBS 115.81, ATCC 24927 (twelve replicates) at 25 °C. Hyphal density ($mm^2$ mycelium per 100 $mm^2$ area) was measured in two areas of each of 10 Petri-dishes for each isolate of A. oligospora using image analysis (GOP-302, Context Vision). Density was recorded by selecting an optimum threshold value for contrast line (hypha)-background (agar). The cultures were four weeks old and grown at 25 °C.

### 4. Examples

#### 4.1 Ability of different nematophagous fungi to capture root-knot nematodes.

Both Meloidogyne spp. were captured with approximately the same efficacy by A. conoides, A. dactyloides, A. oligospora (CBS 289.82), A. scaphoides and M. cionopagum (Fig. 1). Other isolates of A. oligospora (CBS 115.81 and ATCC 24927) and D. flagrans (CBS 565.50) completely failed to capture juveniles from populations of M. hapla and M. incognita irrespective of the age of the mycelia (1, 2, 3 or 4 weeks) or the sterilization method (streptomycin-Aretan, demi-water or none). The surface treatment method did not affect the capture ability in the effective isolate of A. oligospora, CBS 289.82 and 100 % of the nematodes were captured in all treatment.

After one day, significant differences could be observed between the five effective fungi both in percentage of nematodes captured (P<0.001) and percentage of immobilized nematodes (P< 0.001)). A.

oligospora (CBS 289.82) and M. cionopagum captured M. hapla and M. incognita to a significantly (P< 0.001) higher level (86 % to 96 % respectively) than A. conoides (51 % and 61 % respectively). Significantly fewer of these nematode species were captured in A. dactyloides and A. scaphoides: 0-25 % (P< 0.001). Two days following the start of experiment A. scaphoides had caught significantly fewer juveniles of M. incognita than the other four fungi (P< 0.01). The proportion of nematodes captured by the other four fungal species reached a maximum between days 2 and 9 at values between 70 and 100 %. A conoides and A. scaphoides were less effective in immobilizing of nematodes than the other guni (P<0.001).

Although by day 9, a. scaphoides had only captured 51 % of the M. incognita nematodes, most of those were immobilized, as in the more effective Meloidogyne-capturing fungi. In contrast, in the other less effective fungus A. conoides, 18 % of M. hapla nematodes and 37 % of M. incognita nematodes were still active after 9 days even when ring structures were present around the nematodes's body.

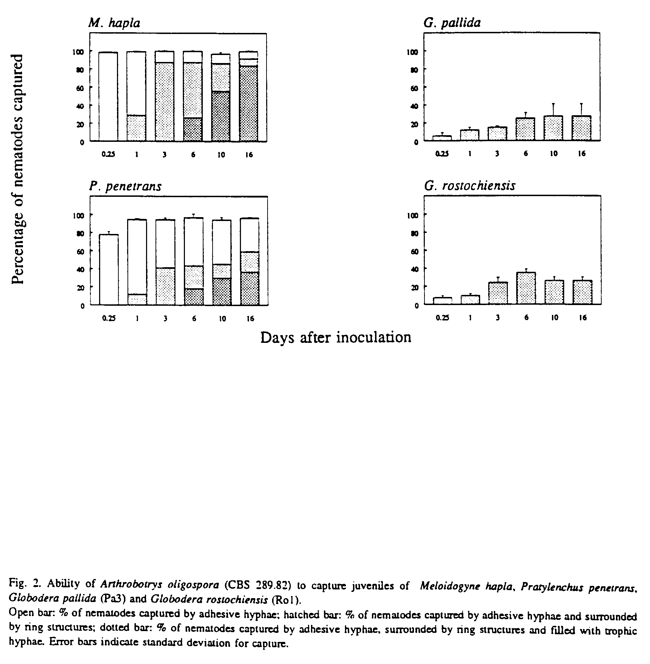

Capture of four different plant-parasitic nematodes by A. oligospora (CBS 289.82). Significant differences were observed in the ability of a. oligospora (CBS 289.82) to capture G. pallida, G. rostochiensis, M. hapla and P. penetrans, as well as in the formation of ring structures and the development of trophic hyphae in the interior of the various species (Fig. 2).

Of the four plant-parasitic nematode species tested, all the juveniles of M. hapla were captured within 6 h and those of P. penetrans (plus the adults) within 24 h. However, the number of juveniles of G. pallida and G. rostochiensis captured was significantly less and reached only about 30 % irrespective their activity. The formation of ring structure in A. oligospora (CBS 289.82) started with all nematode species within 24 h. After one day, 30 % of the juveniles of M. hapla had fungal ring structures around the body compared to only 10 % in the other nematodes species.

After sixteen days more than 90 % of the captured juveniles of M. hapla showed one or ring structures around the body. The remaining 10 % of the nematodes laid motionless alongside the hyphae by which they had been captured. At the same time only 60 % of the nematodes of P. pentrans were surrounded by ring structures, 30 of those attached, continued to wriggle at the place of attachment, not yet inducing ring structures.

As for the two Globodera species tested, the development of ring structures lagged far behind: after 16 days only 27 % of the nematodes was surrounded by a ring, while the development of trophic hyphae inside the nematode body had not started at all. At day 16, more than 80 % of the nematodes of M. hapla were filled with trophic hyphae while in P. penetrans this percentage was below 40 % (Fig. 2). Development of trophic hyphae occured only when ring structures were present.

The data presented in Fig. 2 suggests that Globodera species were not normally colonised by the fungus in this test.

4.2 Capture mechanism of A. oligospora (CBS 289.82)

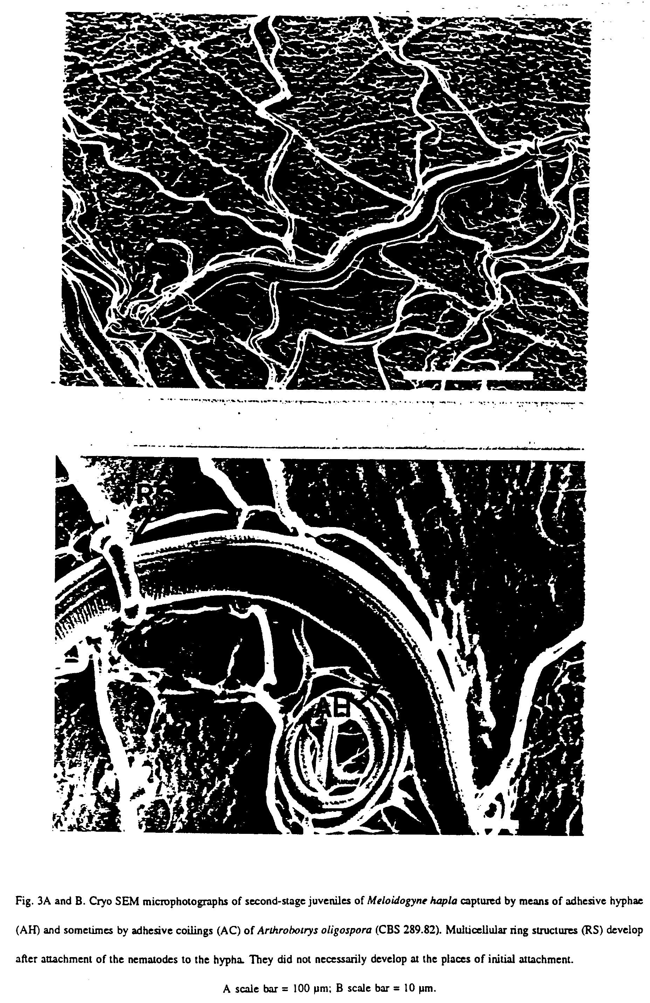

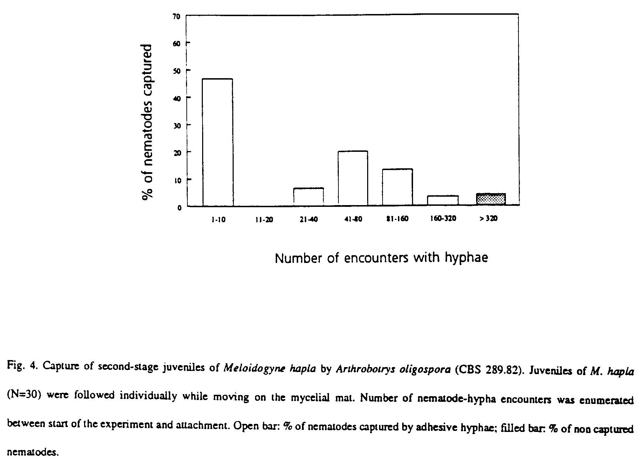

A. oligospora (CBS 289.82) showed the ability to capture nematodes by direct attachment to morphologically unmodified hyphae and to coilings, at places not markedly differentiated (Fig. 3A and B). Because this has not previously been described for this species, its identity was confirmed twice by Centraalbureau voor Schimmelcultures, Baarn, The Netherlands, through identification of conidia developed on nematode-infested cultures. Observation of second-stage juveniles during locomotion showed that A. oligospora (CBS 289.82) attached to almost 45 % juveniles of M. hapla during one of the first contacts with a hyphae (Fig. 4). Average nematode-hypha encounters between the beginning of the experiment and attachment was about 100, two juveniles were not attached after 320 encounters with a hypha within the observation period of 45 min (Fig. 4). Nematodes were also attached to newly formed hyphae (24, 48, 72, 96 h) and these hyphae were able to produce ring structures around the nematodes.

Following attachment of the nematodes to the hyphae, 50 % of the ring structures did not develop at the initial attachment site (Fig. 3A and B). The subsequent development of an infection bulb and of trophic hyphae did not occur if nematodes were only attached to hyphae.

Saprophytic growth rate and hyphal density of several nematode-capturing fungi. As shown in Table 1, A. conoides, A. oligospora (CBS 289.82) and M. cionopagum grew slowly at 5 °C but no growth was observed in the two other species. There was no growth of any species at 35 °C. Radial growth rate optima were at 15 - 20 °C or at 20 - 25 °C. A. scaphoides, the least effective capturing fungus, was the fastest growing species. Comparisons among A. oligospora isolates showed significant differences: at 15 °C, A. oligospora (CBS 289.82), the most effective capturing isolate, grew half as fast as the two other species and hyphal density was also significantly lower (Table 2).

4.3 Effect of temperature on nematode-hypha attachment

In Table 3 an overview is given of variable parameters during incubation and testing in the various temperature experiments. Four or six weeks old cultures of A. oligospora grown at 25 °C (Experiments 1 and 2 respectively) were placed at each of the following constant temperatures, 48 h prior to the addition of nematodes: 5, 10, 15, 20, 25, 30 °C (and also 35 °C in Experiment 2) and tested at those temperatures).

In Experiment 3, six weeks old fungal cultures of A. oligospora, grown at 25 °C and originating from the same batch as those in Experiment 2, were placed during more than five weeks at 5 °C, 10 °C or 15 °C and remained at these temperatures after addition of the nematodes (Table 3). In Experiment 4, cultures of A. oligospora were grown during six weeks at 5, 10 or 15 °C and were tested at the same temperatures. In Experiment 5 the cultures were grown at 15 °C for four weeks and tested at 5, 10 and 15 °C (Table 3).

In Experiments 1, 2 and 3 numbers of captured juveniles were counted daily starting after one day. Counts were expressed as a percentage of the total number of live nematodes counted immediately after the start of the experiment. Nematodes captured by hyphae, those surrounded by ring structures and the number of nematodes with trophic hyphae inside were scored separately. In Experiment 4 observations on capture started after 6 h, while in Experiment 5 the number of captured nematodes were registered already at 1, 2, 3, 4 and 6 h.

At the end of each experiment the mycelial mat was examined for any morphological changes to check whether vegetative hyphae had died.

The proportion of nematodes captured by hyphae, surrounded by ring structures and filled with trophic hyphae were analyzed with a Generalized Linear Model (GLM) for binomial data (Mc Cullagh & Nelder, 1989), leading to an analysis of deviance for quantal data and subjected to a Student's t-test for pairwise comparison of treatments on a logit-scale. This was only possible if the mean proportions were not equal to 0 or 1. For these means significance was obtained by considering confidence intervals. Analysis were carried out with Genstat (1987). All statistical tests were performed with a significance level of 0.05. In addition to variables mentioned above, in Experiment 2 also the colonization of each nematode was determined at regular intervals (day 1, 2, 5, 8, 12, 15, 21, 27, 36, 44, 63) and expressed as percentage of body length filled with trophic hyphae.

Five classes were distinguished: 0 (no visible mycelium body), 0-25, 25-50, 50-75 and 75-100 % body length with hyphae. The products of the total percentage counts in each of the groups and the midpoints of these groups was summed to give a percentage estimate of the body length filled with trophic hyphae. The technique is based on the assumption that the presence of trophic hyphae is indicative for the colonization. $T_{50}$ and $T_{95}$ (days after inoculation when 50 and 95 % of the nematode body length was filled with trophic hyphae) were calculated under the assumption of logistic growth increase of trophic hyphae filled body length. $T_{50}$ and $T_{95}$ were estimated for each Petri-dish and subsequently analysed by analysis of variance followed by student's t-test for pairwise comparison of treatments.

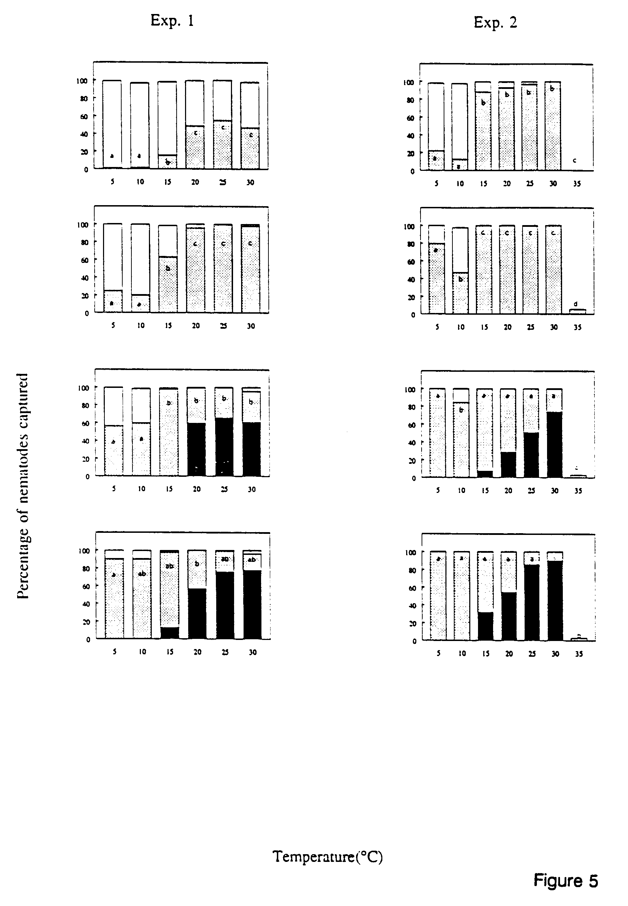

Figure 5a and 5b shows the effects of temperature on the ability of hyphae of A. oligospora (CBS 289.82) to capture and infect M. hapla. At the first observation 24 h after inoculation of the nematodes, all second-stage juveniles of M. hapla were captured by the hyphae of the four weeks old cultures of A. oligospora at all temperatures below 35 °C (Experiment 1 and 2). Nematodes became attached at any part of the body. At 35 °C, nematodes and hyphae failed to attach to each other.

Mycelium of A. oligospora grown under suboptimal temperatures for vegetative growth (Experiment 3 and 4, Fig. 5b), did not show any decline in nematode attachment compared to hyphae grown at the optimum temperature for vegetative growth (Experiments 1 and 2, Fig. 5a). In experiment 4, all nematodes were captured at the first observation after six hours, irrespective of the temperatures tested (Fig. 5b). Immediate observation one hour after the start of Experiment 5 showed that all nematodes were captured at the temperatures tested.

4.4 Effect of temperature on ring structure development and effect of temperature on activity of second-stage juveniles of M. hapla

Nematode activity was measured in order to analyse whether any temperature effects on the capture of nematodes was due to the ability of the fungus to capture juveniles of M. hapla or to the activity of the juveniles. In the centre of a Petri-dish with CMA 1:10, 1.5 % agar, 50 axenic second-stage juveniles of M. hapla (from the same batch as in Experiment 2) were inoculated. Two hours after introduction, nematode mobility was assessed by counting the number of juveniles in four concentric zones of 5 mm from the inoculation point. Tests were performed at 5 °, 10 °, 15 °, 20 °, 25 °, 30 ° and 35 °C.

For each temperature an average mobility was calculated using the following formula:

$$M = \sum_{i=u}^{i=3} f. \, Di$$

f = fraction of nematodes present in area i
Di = average distance (mm) from centre for area i

| i = 0 | 0 < r ≤ 5 mm | Di = 5 mm |
|---|---|---|
| i = 1 | 5 < r ≤ 10 mm | Di = 7.5 mm |
| i = 2 | 10 < r ≤ 15 mm | Di = 12.5 mm |
| i = 3 | 15 < r ≤ rim Petri dish | Di = 17.5 mm |

The nematode mobility for different temperatures was analysed by using one-way ANOVA, followed by a Student's t-test for comparison of means.

Subsequent development of ring structures around the nematodes differed significantly between tested temperatures during the frist six days after capture (Experiment 1, Fig. 5a). At 5 and 10 °C only and 2 % of the nematodes became surrounded, at 15 °C the number of nematodes surrounded by ring structures was 15 % and at 20, 25 and 30 °C this number was significantly higher, namely 50 %. At day 2 these differences were still significant although less pronounced. At 5 and 10 °C the number of surrounded nematodes reached only 20 %, at 15 °C this number reached about 60 % and at three highest temperatures tested, the proportion of nematodes surrounded by ring structures reached almost 100 %. At day 8 at all temperatures the ring structure development was 90 % or higher.

In the higher temperature experiment the development of ring structures around nematodes progressed more rapidly (Fig. 5a). After one day, almost all nematodes were surrounded by ring structures at 15 °C, whereas at 5 and 10 °C these number were less than 40 %. At days 7 and 8 all nematodes were surrounded at all temperatures ≤ 30 °C even when the mycelium was grown at low temperatures (Experiment 3 and 4, Fig. 5b).

### 4.5 Effect of temperature on trophic hyphae development

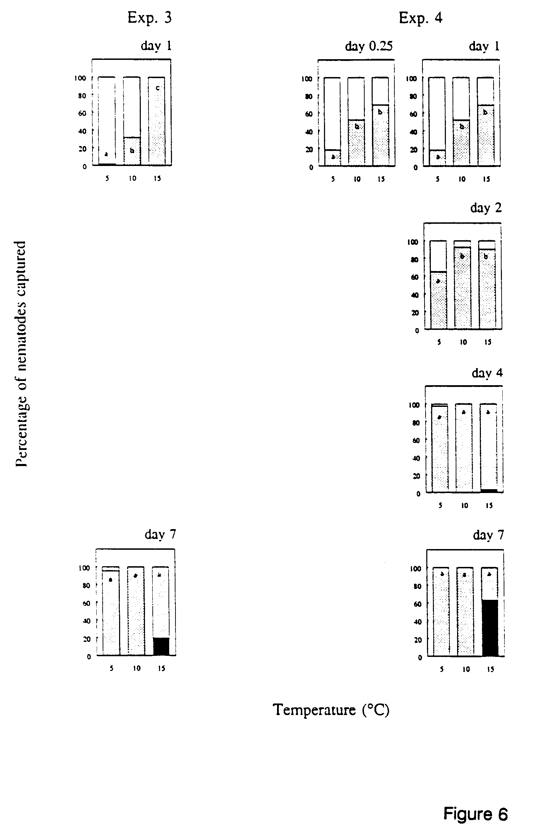

Development of trophic hyphae in the nematode body was significantly influenced by temperature. This resulted in significant differences in the number of days after which 50 % or 95 % of the nematode body length was filled with hyphae (Fig. 6, Table 5). In mycelium of A. oligospora, grown or kept under suboptimal conditions for vegetative growth (Experiment 3 and 4), development of trophic hyphae was not altered in comparison to the earlier experiments (Fig. 5a and b).

### 4.6 Nematode mobility in response to temperature

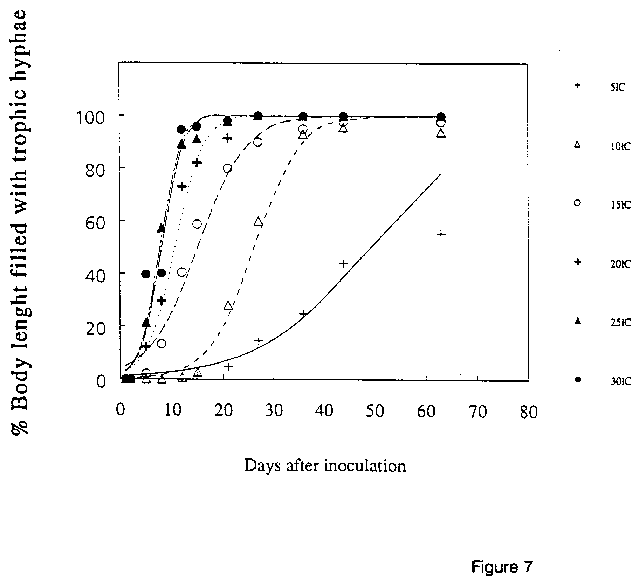

All tested juveniles of M. hapla dispersed over the agar. The nematode activity is shown in Fig. 7. Mobility differed significantly between the temperatures tested: at 25 °C the highest mobility was reached, 7.3 mm $h^{-1}$, while at 5 °C a mobility of 2.2 mm $h^{-1}$ was observed (Fig. 7).

### 4.7 Effect of growth substrates on capture ability

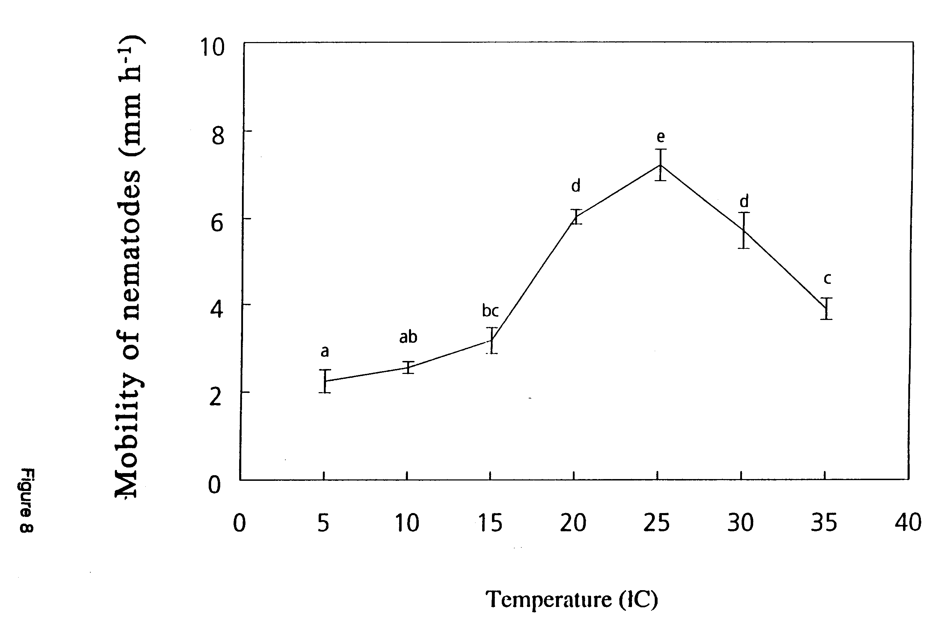

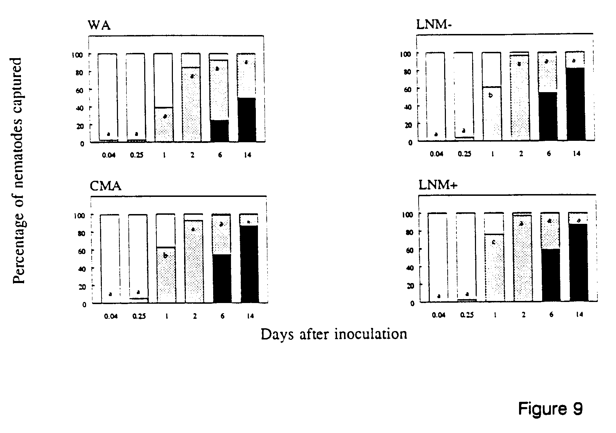

The fungus was grown on substrates differing in nutritional quality: water agar 1.5 % corn meal agar (CMA, 1:10) and a low nutrient mineral salts medium with or without 200 $\mu$gr thiamin and 5 $\mu$gr biotin/liter (LNM + and LNM-respectively, Nordbring-Hertz, 1973). One and four weeks old fungal cultures of A. oligospora grown at 25 °C, were inoculated with 50 axenic second-stage juveniles of M. hapla at 25 °C. Observations on number of attached and infected nematodes were made 1 and 6 h and 1, 2, 6 and 16 days after addition of nematodes. The average number of ring structures around the attached nematodes counted one day after the start of the experiment. Each treatment consisted of 3 replicates and the experiment was repeated three times (Fig. 8).

At day 6 and 14 the development of trophic hyphae in the interior of the nematode body reached about 55 % and 85 % in LNM-, CMA and LNM +. On WA these percentages were significantly lower: in only 25 % and 50 % of the nematodes trophic hyphae developed.

The number of captured nematodes, nematodes surrounded with ring structures and nematodes with trophic hyphae were analysed as described for the temperature experiments.

In order to analyse if differences in capture of nematodes were due to higher frequency of nematodes encountering hyphae and or ring structures, mycelium growth, hyphal density and numer of spontaneous ring structures (freely and not surrounding nematodes) were determined. Average mycelial growth rate (mm/day) was recorded as the average distance from the inoculated agar piece to the outer rim of the growing hyphae (at day 3 and 5 in 10 replicates). The hyphal density, expressed as area of mycelium $mm^2$ per 100 $mm^2$ was measured in two areas of 10 Petri-dishes for each nutrient level in the four weeks old colonies, using image analysis (GOP-302, Context Vision). Ring structure formation was observed one day before and one day after addition of nematodes, by counting the number of ring structures in 20 fields of sight (at 200x magnification).

Within one hour following addition of nematodes, all second-stage juveniles of M. hapla were captured successfully by the hyphae of A. oligospora, irrespective of differences in hyphal density at the various nutrient levels (Table 5). One day after the start of the experiment a higher percentage of nematodes was surrounded by ring structures on LNM + (76 %) as compared to LNM- and CMA 1:10 (61.0 and 63 %, respectively), while WA demonstrated a significantly lower percentage of juveniles surrounded by ring structures (39 %). After two days this percentage increased to 84 % on WA and to about 97 % on the other substrates. The number of ring structures around the nematodes was significantly higher on LNM + and LNM-, than either on water agar or corn meal agar (Table 5).

4.8 Effect of light on capture ability

Four weeks old cultures of A. oligospora were inoculated with 50 axenic second-stage juveniles of M. hapla and incubated ant 25 °C. Three Petri-dishes were placed in the dark and three Petri-dishes were incubated under constant artificial light (Philips Pls lamp 11 Watt, wavelength 310-765 nm, 8.6 $J/cm^2/h$). Numbers of captured and infected nematodes were counted at regular intervals (day 1, 2, 4, 7, 9, 11, 14, 23). The number of ring structures surrounding juveniles was counted 3 and 13 days after the start of the experiment. Per Petri-dish ten randomly selected fields of sight were examined (at 200x magnification). Only completely closed ring structures were enumerated. In one experiment two isolates of A. oligospora (ATCC 24927 and CBS 115.81) have been included under the same experimental conditions.

As the results of all three experiments on the influence of light (8.6 $Joule/cm^2/h$, 310-765 nm) were alike, results are given for only one (Table 6). Light did not alter the number of nematodes captured by A. oligospora nor had light a significant effect on the number of ring structures induced or the development of trophic hyphae in nematodes.

The number of ring structures surrounding juveniles counted 3 and 13 days after the start of the experiments, were not influenced significantly by light or dark (at day 3:3.3 and 3.6 and at day 13, 3.6 and 3.7 respectively). Also, light did not alter A. oligospora (ATCC 24927) and A. oligospora (CBS 115.81): second-stage juveniles of M. hapla did not attach to the fungus.

4.9 Effect of ageing of fungal mycelium on capture and infection.

Experiments on the effects of the growth time of the fungal mycelium on the capture and infection of nematodes were conducted as parts of the experiments on the temperature and nutrient level by using fungal varying in age.

Seven week old cultures of A. oligospora did not show a decline in capture and infection of nematodes in comparison to four week old cultures (Experiment 2 and 1 respectively, Fig. 5a).

Capture ability of A. oligospora and subsequent infection by trophic did not show any decline after keeping mycelium at low temperatures during a prolonged period of time (Experiment 3, 78 days: 42 days at 25 °C and subsequently 36 days at 5, 10 or 15 °C Experiment 4, 42 days at 5, 10, 15 °C). In this respect there was no significant difference with Experiment 1. In none of the experiments dead or morphologically aberrant hyphae were found in the time course of the experiments.

Under adverse temperatures that do not favour ring structure development or vegetative growth, or under poor nutritional conditions for ring structures development, our isolate tested shows the capacity to attach nematodes with adhesive hyphae. This clearly illustrates lower demands on temperature and nutrition than needed for ring structure formation. This implies that the range of circumstances for this fungus to capture nematodes and to be active as a control agent is very broad.

6. References

Belder, E. den (1991). Screening for the activity of fungal metabolites. In: Methods for studying nematophagous fungi. Kerry, B.R. & Crump, D.H. (Eds.). IOBC/WPRS Bulletin, pp. 47-57.

Blackburn, F. & Hayes A. (1966). Studies on the nutritions of Arthrobotrys oligospora Fresn. and A. robusta Dudd., I. The saprophytic phase. Ann. Appl. Biol. 58: 43-50.

Boag, B., Robertson, W.M. & Ainsworth, L.F. (1988). Observations on the specificity of the nematophagous fungus Arthrobotrys dasguptae (Shome and Shome) to plantparasitic nematodes. Nematologica 34, 238-245.

Couch, J. N. (1937). The formation and operation of the traps in the nematode-catching fungus, Dactylella bembicoides. J. Elisha Mitchell Sci. Soc. 53: 301-309.

Esser, R. P., El-Gholl, N. E. & Price, M. (1991), Biology of Dactylella megalospora Drechs., a nematophagous fungus. Soil Crop Sci. Sco. Fla. Proc. 50, 173-180.

Feder, W. A. (1963). A comparison of nematode-capturing efficencies of five Dactylella-species at for temperatures. Mycopath. Mycol. Appl. 19: 99-104. Genstat 5 Committee (1987). Genstat 5 reference manual, Clarendon Press, Oxford.

Gronvold, J. (1989). Induction of nematode-trapping organs in the predacious fungus, Athrobotrys oligospora (Hyphomycetales) by infective larvae of Ostertagia ostertagi (Trichostrongylidae). Acta Vet. Scand. 30: 77-87.

Hayes, W. A. & Blackburn F. (1966). Studies on the nutrition of Arthrobotrys oligospora Fres. and A. robusta dudd., II. The predacious phase. Ann. App. Biol. 58: 51-60.

Heintz, C. E. (1978). Assessing the predacity of nematode-trapping fungi in vitro. Mycologia, 70: 1086-1100.

s'Jacob, J.J. & van Bezooyen, J. (1984). In: A manual for practical work in nematology (revised edition). Int. Postgraduate Nematology Course, Int. Agric. Centre, Wageningen, The Netherlands.

Jaffee, B.A., Muldoon A. E. & Tradford, E. C. (1992). Trap production by nematophagous fungi growing from parasitized nematodes. Phytopathology 82: 615-620.

Jansson, H. B. & Nordbring-Hertz, B. (1980). Interactions between nematophagous fungi and plant-parasitic nematodes: attraction, induction of trap formation and capture. Nematologica 26: 383-389.

Leach, C. (1971). A practical guide to the effects of visible and ultraviolet light on fungi. In: Methods of microbiology, Booth, C. (Ed). Academic Press, London, pp. 609-664.

McCullagh P. & Nelder, J. A. (1989). Generalized linear models (2nd ed). Chapman and Hall, London, England.

Murray D. S. & Wharton D. A. (1990). Capture and penetration of the free-living juveniles of Trichostrongylus colubriformis (Nematoda) by the nematophagous fungus Arthrobotrys oligospora. Parasitology 101: 93-100.

Nordbring-Hertz, B. (1968). The influence of medium composition and additions of animal origin on the formation of capture organs in Arthrobotrys oligospora. Physiol. Plant. Pathol. 21: 52-65.

Nordbring-Hertz, B. (1973). Peptide-induced morphogenesis in the nematode-trapping fungus, Arthrobotrys oligospora. Physiol. Plant 29: 223-233.

Nordbring-Hertz, B. (1977). Nematode-induced morphogenesis in the predacious fungus, Arthrobotrys oligospora, Nematologica 23: 443-451.

Nordbring-Hertz, B. Stalhammar-Carlemalm, M. (1978). Capture of nematodes by Arthrobotrys oligospora, an electron microscopic study. Can. J. Bot. 56: 1297-1307.

Poinar, G. O. & Jansson, H. B. (1986). Infection of Neoplectana and Heterorhabditis (Rhabditida: Nematoda) with the predatory fungi, Monacrosporium ellipsosporum and Arthrobotrys oligospora (Moniliales: Deuteromycetes). Revue Nématol. 9: 241-244.

Stirling, G. R. (1991). Biological control of plant parasitic nematodes: progress, problems and prospects. C. A. B. International, Wallington. pp. 282.

Soprunov, F. F. (1966). Predacious hyphomycetes and their application in the control of pathogenic nematodes. (Translation from Russian) Israel program for scientific translations, Washington, p. 292.

Tunlid, A., Johansson, T. & Nordbring-Hertz, B. (1991). Surface polymers of the nematode-trapping fungus Arthrobotrys oligospora, J. Gen. Microb. 137, 1231-1240.

Tunlid, A., Jansson, H.B. & Nordbring-Hertz, B. (1992). Fungal attachment to nematodes. Mycol. Res. 96, 401-412.

Veenhuis, M. Sjollema, K., Nordbring-Hertz, B. & Harder, W. (1989). An improved method for light-and electron microscopical studies of nematode/fungal interactions. Antonie van Leewenhoek 55: 361-368.

7. Legends

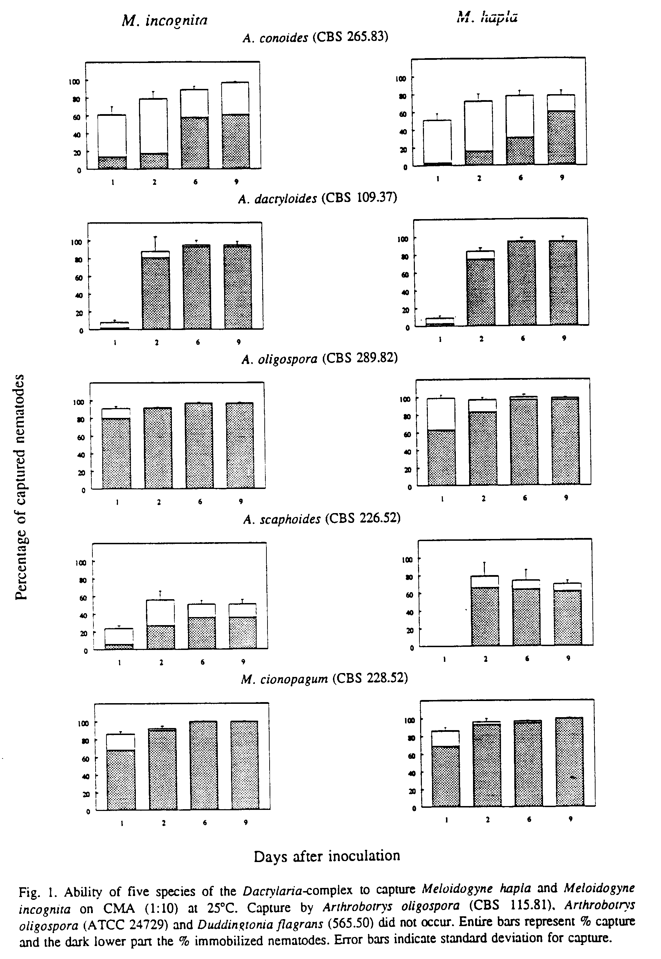

Fig. 1: Ability of different nematophagous fungi to capture root-knot nematodes.

Fig. 2: Ability of Arthrobotrys oligospora (CBS 289.82) fungi to capture Meloidogyne hapl, Pratylenchus penetrans, Globodera pallida and Globodera rostochiensis.

Fig. 3: Capture mechanism of A. oligospora (CBS 289.82)

Fig. 4: Capture of second stage juveniles of Meloidogyne hapla by Arthrobotrys oligospora (CBS 289.82).

Fig. 5a. Ability of Arthrobotrys oligospora (CBS 289.82) to capture and infect second-stage juveniles of Meloidogyne hapla at different temperatures. In Exp. 1 carried out with four weeks old cultures at 25 °C followed by 2 days at the least temperatures. Exp. 2 as Exp. 1 but with six weeks old cultures. Open bar: % of nematodes captured by adhesive hyphae; dotted bar: % nematodes captured by adhesive hyphae and surrounded by ring structures; filled bar: % of nematodes captured by adhesive hyphae, surrounded by ring structures and at least filled with trophic hyphae. [1] Different letters indicate significant differences between means of number of juveniles surrounded by ring structures within each experiment and each day ($\alpha$ = 0.05).

Fig. 5b. Ability of Arthrobotrys oligospora (CBS 289.82) to capture and infect second-stage juveniles of Meloidogyne hapla at different temperatures: Exp. 3 carried out with a culture grown for six weeks at 25 °C and followed by five weeks at the test temperatures. Exp. 4 carried out with a cultures grown for six weeks at the experimental temperatures. Open bar: % of nematodes captured by adhesive hyphae; dotted bar: % of nematodes captured by adhesive hyphae and surrounded by ring structures; filled bar: % of nematodes captured by adhesive hyphae, surrounded by ring structures and at least filled with trophic hyphae. [1] Different letters indicate significant differences between means of numbers of juveniles surrounded by ring structures within each experiment and each day ($\alpha$ = 0.05).

Fig. 6. Development of trophic hyphae of Arthrobotrys oligospora (CBS 289.82) inside Meloidogyne hapla at different temperatures. Trophic hyphae development was quantified through estimation of the percentage of the nematode body length filled with trophic hyphae. Observed values are in markers, calculated values (Fieller-procedure in Genstat 5) in lines.

Fig. 7. Mobility of second-stage juveniles of Meloidogyne hapla on CMA (1:10, 1.5 % agar) at different temperatures. Different letters indicate significant differences between means (Analysis of variance followed by a Student's test. $\alpha$ < 0.05.

Fig. 8. Ability of Arthrobotrys oligospora (CBS 289.82) to capture and infect second-stage juveniles of Meloidogyne hapla on substrates with different nutrient levels: WA: water agar 1.5 %, CMA: corn meal agar 1:10, LNM + and LNM-: low nutrient mineral salts media respectively with and without 200 $\mu$gr/liter thiamin and 5 $\mu$gr biotin/liter Open bar: % of nematodes captured by adhesive hyphae; dotted bar: % of nematodes captured by adhesive hyphae and surrounded by ring structures; filled bar: % of nematodes captured by adhesive hyphae, surrounded by ring structures and filled at least partly with trophic hyphae. Different letters indicate significant differences between means of % of juveniles surrounded by ring structures within each day ($\alpha$ = 0.05).

Table 1

| Saprophytic growth rates of nematode-capturing Hyphomycetes on CMA 1:10 (mm/day) | | | | | |
|---|---|---|---|---|---|
| | A. conoides (CBS 265.83) | A. dactyloides (CBS 5109.37) | A. oligospora (CBS 289.82) | A. scaphoides (CBS 226.52) | M. cionopagum (CBS 228.52) |
| Temperature (°C) | | | | | |
| 5 | 0.1 ±0.1 [1] | 0 | 0.1 ±0.1 | 0 | 0.1 ±0.3 |
| 10 | 0.4 ±0.1 | 0.2 ±0.1 | 0.4 ±0.1 | 0.3 ±0.1 | 0.2 ±0.1 |
| 15 | 0.8 ±0.1 | 2.3 ±0.1 | 0.9 ±0.4 | 2.0 ±0.1 | 1.7 ±0.6 |
| 20 | 1.7 ±0.3 | 2.3 ±0.2 | 2.3 ±0.1 | 2.2 ±0.3 | 2.1 ±0.2 |
| 25 | 2.0 ±0.3 | 1.7 ±0.3 | 2.9 ±0.1 | 5.0 ±0.3 | 1.5 ±0.2 |
| 30 | 2.0 ±0.1 | 1.5 ±0.2 | 2.5 ±0.2 | 0.3 ±0.2 | 0.3 ±0.1 |
| 35 | 0 | 0 | 0 | 0 | 0 |

[1]Mean ± s.e.

Table 2

| *Saprophytic growth rate (mm/ day) and hyphae density ($mm^2$ mycelium per 100$mm^2$) of three isolates of Arthrobotrys oligospora on CMA 1:10 at 25°C* | | | |
|---|---|---|---|
| | *Arthrobotrys oligospora* | | |
| | CBS 289.82 | CBS 115.81 | ATCC 24927 |
| Saprophytic growth | 2.9±0.2[1] a[2] | 4.4±0.3 b | 4.3±0.3 b |
| Hyphae density[3] | 21.8±0.4[1] a[2] | 23.5±0.6 b | 25.4±0.6 c |

[1] Mean ± s.e.

[2] Different letters indicate significant differences between isolates (P<0.001).

[3] Hyphae density was measured using image analysis.

Table 3

| Experimental conditions of Temperature Experiments 1 to 5. | | | |
|---|---|---|---|
| | time of culturing fungus before experiment (days) | temperature during culturing before experiment (°C) | test temperature (°C) |
| Exp. 1 | 28 | 25 | 5, 10, 15, 20, 25, 30 |
| Exp. 2 | 42 | 25 | 5, 10, 15, 20, 25, 30, 35 |
| Exp. 3 | 42 + | 25 | |
| | 36 | 5, 10, 15 | 5, 10, 15 |
| Exp. 4 | 42 | 5, 10, 15 | 5, 10, 15 |
| Exp. 5 | 28 | 15 | 5, 10, 15 |

Table 4

| Development of trophic hyphae of *Arthrobotrys oligospora* (CBS 289.82) in second-stage juveniles of *Meloidogyne hapla* at different temperatures, expressed in days after inoculation when 50% and 95 % of the nematode body lenght was filled with trophic hyphae ($T_{50}$ and $T_{95}$). | | | |
|---|---|---|---|
| Temperature (°C) | $T_{50}$ | | $T_{95}$ | |
| 5 | 47.6±3.8[1] | a[2] | 77.2±8.9 | a |
| 10 | 24.8±1.0 | b | 35.4±4.7 | b |
| 15 | 15.1±1.8 | c | 28.3±2.8 | bc |
| 20 | 10.6±0.8 | cd | 18.5±0.3 | cd |
| 25 | 7.9±0.3 | d | 13.4±1.1 | d |
| 30 | 7.8±0.9 | d | 13.5±0.7 | d |
| 35 | ∞ | n.t. | ∞ | n.t. |

[1] Mean ± s.e.

[2] $T_{50}$ and $T_{95}$ were estimated for each Petri-dish and subsequently tested by analysis of variance followed by Student's t-test for pairwise comparison of treatments. Different letters indicate significant differences between means in the column ($\alpha$ < 0.05).

n.t.: not tested

**Table 5** Growth rate, mycelial density and formation of ring structures in *Arthrobotrys oligospora* (CBS 289.82) on different substrates before and after addition of second-stage juveniles of *Meloidogyne hapla*.

| Medium | | Vegetative hyphae | | Number of ring structures | | |
|---|---|---|---|---|---|---|
| | pH | Growth[1] | Density[2] | Before addition of *M. hapla*[3] | After addition of *M. hapla*[3] | Number of ring structures around *M. hapla*[4] |
| 1.5% water agar | 5.5 | 2.7±0.1 a[5] | 23.2±1.5[5] a | 5 | 4 | 2.8±1.3[5] a |
| LNM-[6] | 6.5 | 3.1±0.1 b | 19.9±2.8 b | 3 | 2 | 4.0±1.8 b |
| LNM+[6] | 6.5 | 3.4±0.1 c | 20.7±2.6 bc | 2 | 2 | 4.6±1.6 b |
| CMA 1:10 | 5.5 | 2.9±0.1 ab | 21.5±1.5 c | 1 | 1 | 2.5±1.4 a |

[1] Radial growth: mm/day
[2] Mycelial density: $mm^2$ mycelium per 100 $mm^2$ agar in four weeks old fungal colonies
[3] Number of ring structures in 20 fields of sight (at 200x magnification)
[4] Number of ring structures around 10 nematodes per Petri dish one day after addition of the nematodes
[5] Mean ± s.e. Different letters indicate significant differences (Student's t-test, $\alpha = 0.05$)
[6] Low nutrient mineral salts medium with(+) and without(-) thiamin and biotin

EP 0 623 284 A1

**Table 6** Capture ability of *Arthrobotrys oligospora* (CBS 289.82) after addition of second-stage juveniles of *Meloidogyne hapla* in continuous light (310-765 nm, 8.6 J/cm²/h) or darkness. (Tests performed in triplicate).

| Days after inoculation | N % juveniles attached to adhesive hyphae | | n % juveniles surrounded by ring structures | | Tr % juveniles filled with trophic hyphae | |
|---|---|---|---|---|---|---|
| | Light | Darkness | Light | Darkness | Light | Darkness |
| 1 | 100 ± 0¹ | 100 ± 0 a | 62 ± 7.7 | 65.2 ± 4.4 a | 0 ± 0 | 0 ± 0 a |
| 2 | 100 ± 0 | 100 ± 0 a | 88.5 ± 4.8 | 88.3 ± 4.5 a | 0 ± 0 | 0 ± 0 a |
| 4 | 99.4 ± 0.9 | 100 ± 0 a | 91.1 ± 3.1 | 94.4 ± 0.5 a | 6.1 ± 2.8 | 6.6 ± 1.8 a |
| 7 | 98.8 ± 1.7 | 100 ± 0 a | 95.0 ± 4.4 | 96.2 ± 1.8 a | 39.5 ± 19.9 | 49.8 ± 3.9 a |
| 9 | 98.7 ± 1.7 | 100 ± 0 a | 90.5 ± 5.1 | 98.6 ± 2.0 a | 56.4 ± 12.4 | 71.0 ± 3.8 a |
| 14 | 98.1 ± 1.5 | 100 ± 0 a | 90.6 ± 4.0 | 98.6 ± 2.0 a | 71.0 ± 10 | 85.0 ± 1.6 a |
| 23 | 98.0 ± 1.5 | 100 ± 0 a | 91.2 ± 3.1 | 98.6 ± 2.0 a | 75.9 ± 8.2 | 88.8 ± 2.5 a |

¹) Mean ± s.e
²) Different letters indicate significant differences between means in the column ($\alpha = 0.05$)

# Claims

1. Nematicidal composition, containing fungi which form a sticky mycelium having undifferentiated hyphae which are able to attach to the nematodes.

2. Composition according to Claim 1, where the nematicidal is formed from fungi of the class of the Dactylaria.

3. Composition according to Claims 1 and 2 which are suitable for combating nematodes, preferably root knot nematodes, especially Meloidogyne hapla or incognita.

4. Process for protecting plants against the action of plant parasitic nematodes, which comprises treating the plants, parts of the plants or the soil with nematophagous fungi having undifferentiated hyphae which are able to attach to the nematodes.

5. Process according to claim 4 in which the fungus is Arthrobotrys oligospora (CBS 289.82).

6. Use of nematophagous fungi which form a sticky mycelium having undifferentiated hyphae which are able to attach to the nematodes to control plant parasitic nematodes.

7. Use of the compostion according to claims 1 to 3 for treating plants.

8. Use of the composition according to Claims 1 to 3 for combating nematodes preferably Meloidogyne hapla.

9. Use of the Arthrobotrys oligospora corresponding to CBS 289.82 and of their mutants and variants, for producing the agents according to Claims 1 to 3.

*M. incognita*

*M. hapla*

A. conoides (CBS 265.83)

A. dactyloides (CBS 109.37)

A. oligospora (CBS 289.82)

A. scaphoides (CBS 226.52)

M. cionopagum (CBS 228.52)

Percentage of captured nematodes

Days after inoculation

Fig. 1. Ability of five species of the *Dactylaria*-complex to capture *Meloidogyne hapla* and *Meloidogyne incognita* on CMA (1:10) at 25°C. Capture by *Arthrobotrys oligospora* (CBS 115.81), *Arthrobotrys oligospora* (ATCC 24729) and *Duddingtonia flagrans* (565.50) did not occur. Entire bars represent % capture and the dark lower part the % immobilized nematodes. Error bars indicate standard deviation for capture.

Fig. 2. Ability of *Arthrobotrys oligospora* (CBS 289.82) to capture juveniles of *Meloidogyne hapla, Pratylenchus penetrans, Globodera pallida* (Pa3) and *Globodera rostochiensis* (Ro1).
Open bar: % of nematodes captured by adhesive hyphae; hatched bar: % of nematodes captured by adhesive hyphae and surrounded by ring structures; dotted bar: % of nematodes captured by adhesive hyphae, surrounded by ring structures and filled with trophic hyphae. Error bars indicate standard deviation for capture.

Fig. 3A and B. Cryo SEM microphotographs of second-stage juveniles of *Meloidogyne hapla* captured by means of adhesive hyphae (AH) and sometimes by adhesive coilings (AC) of *Arthrobotrys oligospora* (CBS 289.82). Multicellular ring structures (RS) develop after attachment of the nematodes to the hypha. They did not necessarily develop at the places of initial attachment.

A scale bar = 100 µm; B scale bar = 10 µm.

Fig. 4. Capture of second-stage juveniles of *Meloidogyne hapla* by *Arthrobotrys oligospora* (CBS 289.82). Juveniles of *M. hapla* (N=30) were followed individually while moving on the mycelial mat. Number of nematode-hypha encounters was enumerated between start of the experiment and attachment. Open bar: % of nematodes captured by adhesive hyphae; filled bar: % of non captured nematodes.

Figure 5

Figure 6

Figure 7

Figure 8

Figure 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CROP PROTECTION vol. 5, no. 4, 1986, pages 268 - 276 R.M.SAYRE 'Pathogens for biological control of nematodes' * page 268; figure 1 * | 1-4,6-8 | A01N63/04 |
| X | FR-A-2 402 412 (INSTITUT NATIONAL DE LA RECHERCHE AGRONOMIQUE) * page 3, line 1 - page 3, line 18; claims * | 1-4,6-8 | |
| X | LA RECHERCHE vol. 24, no. 250, January 1993, FR pages 78 - 80 J-C.CAYROL ET. AL. 'Les biopesticides a l`assaut des nématode du sol' * page 79; figure 2A * | 1-4,6-8 | |
| X | CHEMICAL PATENTS INDEX, DOCUMENTATION ABSTRACTS JOURNAL Section Ch, Week 9232, 7 October 1992 Derwent Publications Ltd., London, GB; Class C, AN 267225 & SU-A-1 688 818 (GOSAGROPROM NATURE CONSERVATION RES INST) 7 November 1991 * abstract * | 1-9 | TECHNICAL FIELDS SEARCHED (Int. Cl.5 ) A01N |
| A | CENTRAL PATENTS INDEX, BASIC ABSTRACTS JOURNAL Section Ch, Week 8018, 25 June 1980 Derwent Publications Ltd., London, GB; Class C, AN 32274C & SU-A-683 701 (AS AZERB MICROBIO) 8 September 1979 * abstract * -/-- | | |

The present search report has been drawn up for all claims

| Place of search | Date of completion of the search | Examiner |
|---|---|---|
| THE HAGUE | 21 SEPTEMBER 1993 | DONOVAN T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

European Patent
Office

EUROPEAN SEARCH REPORT

Application Number

EP    93 10 7231
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | PFLANZENSCHUTZBERICHTE<br>vol. 48, no. 2, 1987,<br>pages 37 - 45<br>A.PLENK 'Nematodenfangende Pilze aus<br>ausgewählten Ackerboden'<br><br>----- | | |

TECHNICAL FIELDS
SEARCHED (Int. Cl.5 )

The present search report has been drawn up for all claims

| Place of search | Date of completion of the search | Examiner |
|---|---|---|
| THE HAGUE | 21 SEPTEMBER 1993 | DONOVAN T.M. |